# FASCICULE DE BREVET EUROPEEN

(11) **EP 2 018 318 B1**
(45) Date de publication et mention de la délivrance du brevet: **14.03.2018**
(21) Numéro de dépôt: 07766019.9
(22) Date de dépôt: 09.05.2007
(51) Int. Cl.: B64C 25/26, F16B 21/00, E05B 47/00

(54) **DISPOSITIF DE VERROUILLAGE D'UN ÉLÉMENT MOBILE D'UN AÉRONEF**
STREBE ZUR SICHERUNG EINER BEWEGLICHEN KOMPONENTE EINES FLUGZEUGS
DEVICE FOR LOCKING A MOVABLE COMPONENT OF AN AIRCRAFT

(30) Priorité: 17.05.2006 FR 0651794
(43) Date de publication de la demande: 28.01.2009
(73) Titulaire: Airbus, 31700 Blagnac (FR)
(72) Inventeur: WILBY, Richard, F-31820 Pibrac (FR)
(74) Mandataire: Ilgart, Jean-Christophe
(86) Numéro de dépôt international: PCT/FR2007/051239
(87) Numéro de publication internationale: WO 2007/132111

(56) Documents cités:
- EP-A1- 1 031 685
- WO-A-01/54080
- WO-A-94/07743
- WO-A-2005/006261
- DE-A1- 4 029 208
- US-A- 5 860 622
- US-A1- 2003 206 786

## Description

### DOMAINE TECHNIQUE

La présente invention concerne le domaine des dispositifs de verrouillage d'un élément mobile d'un aéronef.

### ÉTAT DE LA TECHNIQUE ANTÉRIEURE

Lorsqu'un avion stationne au sol pour y subir des opérations d'appareillage ou de maintenance, certains de ses éléments doivent être bloqués ou bridés mécaniquement de manière à éviter leur actionnement intempestif, suite à une erreur humaine ou à la défaillance d'un système de commande. Il est notamment connu d'immobiliser le train d'atterrissage d'un avion pour les besoins de maintenance ou de manutention au sol. On utilise classiquement pour ce faire des broches ou des colliers en acier qui permettent de verrouiller des parties mobiles du train d'atterrissage, par exemple des articulations mécanique ou des vérins de train sorti. Ces dispositifs de verrouillage au sol sont généralement équipés de signes de reconnaissance visuelle, comme des drapeaux ou des flammes de couleur vive, pour être facilement repérés par le personnel au sol, comme par exemple dans le document US 5 860 622. Il est en effet indispensable de libérer les parties mobiles avant le décollage, faute de quoi des incidents graves peuvent survenir pendant le vol. En dépit des précautions prises et d'une vérification systématique, il arrive néanmoins encore régulièrement que des dispositifs de verrouillage du train d'atterrissage ne soient pas retirés lors de la visite prévol. Or, si le train d'atterrissage ne peut être rentré, l'avion doit regagner aussitôt son aéroport de départ. On estime qu'environ 11% des cas de retour à l'aéroport de départ, associés à un problème de train d'atterrissage, sont dus à l'oubli d'un dispositif de verrouillage. Chaque retour implique un largage préalable du kérozène pour réduire le poids de l'avion en deçà du poids maximal autorisé à l'atterrissage. Une telle opération est particulièrement néfaste pour l'environnement et coûteuse tant en carburant qu'en immobilisation.

Parmi les causes identifiées ayant conduit à l'oubli d'un dispositif de verrouillage, on a notamment recensé des signes de reconnaissance visuelle endommagés ou absents. Les drapeaux ou les flammes peuvent en effet se détacher suite à l'usure ou à une mauvaise manipulation, ou bien encore se coincer dans une pièce voisine sous l'action du vent, se soustrayant ainsi à la vue du personnel au sol.

Afin de faciliter leur repérage, les dispositifs de verrouillage sont quelquefois peints d'une couleur vive. Toutefois, les peintures sont rapidement attaquées par les esters phosphorés présents dans la plupart des fluides hydrauliques, de sorte que les dispositifs de verrouillage peuvent rester inaperçus, en particulier sous de mauvaises conditions d'éclairage ou de visibilité.

Un premier but de l'invention est de proposer un dispositif de verrouillage dont la présence soit facilement et rapidement décelable. Un second but de l'invention est de prévoir un dispositif de verrouillage au sol qui puisse être détecté avec une très grande fiabilité. Un troisième but de l'invention est de prévoir un système de détection automatique desdits dispositifs de verrouillage.

### EXPOSÉ DE L'INVENTION

La présente invention est définie par un dispositif de verrouillage d'un élément mobile d'un aéronef comprenant une étiquette électronique adaptée à recevoir un signal d'interrogation et à renvoyer un signal d'identification dudit dispositif.

Selon un premier mode de réalisation, le dispositif de verrouillage se présente sous la forme d'une broche.

Avantageusement, la broche comporte une partie cylindrique présentant une gorge annulaire dans laquelle est montée une antenne omni-directionnelle. L'antenne est de préférence recouverte de manière étanche par une couche élastomère.

Selon un second mode de réalisation, le dispositif de verrouillage se présente sous la forme d'un collier comprenant deux coquilles reliées entre elles au moyen d'une charnière longitudinale.

Avantageusement, au moins une de ces coquilles comprend une partie de forme hémicylindrique présentant une gorge sensiblement demi-annulaire dans laquelle est monté un élément d'antenne. L'élément d'antenne est de préférence recouvert de manière étanche par une couche élastomère.

L'invention est également définie par un système de détection d'au moins un tel dispositif de verrouillage, comprenant:
- des moyens de lecture d'au moins une étiquette électronique pour transmettre un signal d'interrogation et recevoir une réponse contenant des données d'identification dudit dispositif ;
- des moyens de contrôle commandant lesdits moyens de lecture et recevant lesdites données d'identification via un réseau avionique de communication ; et
- des moyens de signalisation indiquant si un dispositif de verrouillage a été identifié.

Les moyens de signalisation sont avantageusement adaptés à indiquer l'emplacement du dispositif de verrouillage sur une représentation synoptique de l'aéronef et/ou à émettre un signal sonore si un dispositif de verrouillage a été détecté.

Enfin, l'invention concerne également un aéronef dans lequel est embarqué un tel système de détection.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1A représente un dispositif de verrouillage selon un premier mode de réalisation de l'invention ;
La Fig. 1B représente une coupe axiale du dispositif de la Fig. 1A ;
La Fig. 2 représente un dispositif de verrouillage selon un second mode de réalisation de l'invention ;
La Fig. 3 représente schématiquement un système avionique permettant de détecter la présence d'un dispositif de verrouillage selon l'invention.

### EXPOSÉ DÉTAILLÉ DE MODES DE RÉALISATION PARTICULIERS

L'idée à la base de l'invention est d'équiper les dispositifs de verrouillage au sol d'étiquettes électroniques RFID (*Radio Frequency IDentification*) encore appelés « tags RFID » ou simplement « tags ».

Les étiquettes électroniques sont bien connues de l'état de la technique. Elles présentent l'avantage de ne pas nécessiter d'alimentation électrique autonome. De manière générale, une étiquette électronique comprend une antenne, une mémoire non volatile dans laquelle sont stockées des informations d'identification, un modulateur adapté à moduler, au moyen desdites informations, un signal d'interrogation reçu par l'antenne avant de réémettre le signal ainsi modulé. Un circuit d'alimentation utilisant l'énergie du signal d'interrogation est prévu pour alimenter le modulateur. Ainsi, lorsque l'étiquette électronique reçoit un signal d'interrogation à une fréquence prédéterminée, ce signal est détecté pour alimenter le modulateur, et une réponse contenant les informations d'identification est renvoyée vers le dispositif interrogateur.

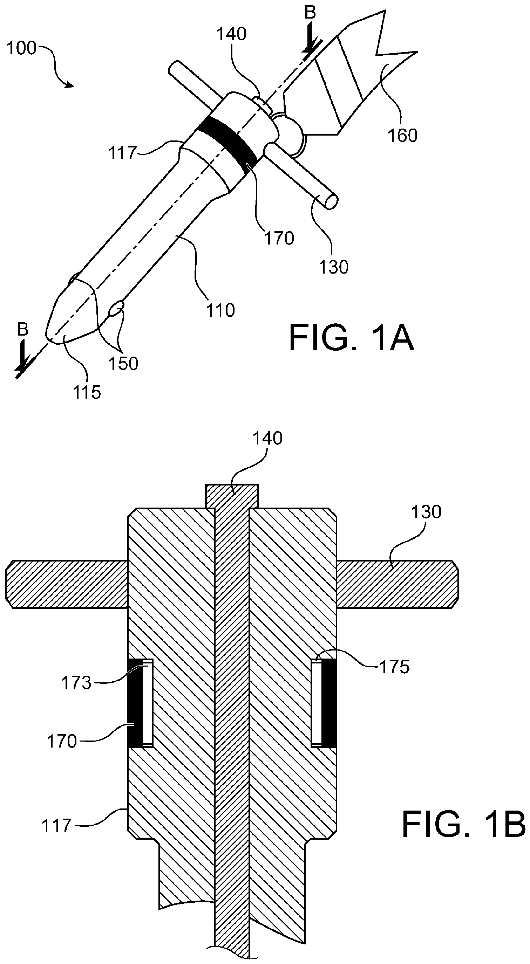

La Fig. 1A illustre un dispositif de verrouillage selon un premier mode de réalisation de l'invention. Il se présente sous la forme d'une broche 100 comportant une première partie cylindrique 110 se prolongeant à sa partie inférieure par une forme conoïdale 115 et à sa partie supérieure par une seconde partie cylindrique 117, coaxiale à la première mais de plus grand diamètre. La première partie cylindrique est destinée à être engagée de manière coulissante dans une cavité correspondante du train d'atterrissage, par exemple dans un élément de la structure se déployant lors de la sortie du train et/ou s'escamotant lors de sa rentrée. La seconde partie cylindrique est destinée à rester hors de ladite cavité. Une barre 130 traverse diamétralement la broche à son extrémité supérieure en dépassant sensiblement de part et d'autre de la seconde partie cylindrique, de sorte que l'extraction et la manipulation de la broche de verrouillage s'en trouvent facilitées. Un piston 140 est prévu pour coulisser à l'intérieur des première et seconde parties cylindriques selon une course axiale limitée par une butée basse et une butée haute. En position de repos, le piston est plaqué en butée haute par un ressort de rappel et dépasse légèrement de la partie supérieure de la seconde forme cylindrique. Dans cette position, le piston fait saillir radialement deux ergots 150 hors de la première partie cylindrique. Plus précisément, ces ergots, avantageusement des billes d'acier, sont montés sur ressort et situés, de manière diamétralement opposée l'un à l'autre, dans la partie inférieure de la première partie cylindrique. Lorsqu'un agent de manutention veut verrouiller le train d'atterrissage, il enfonce la broche dans la cavité correspondante. Les ergots 150 entrent dans leur logement lorsque l'agent appuie sur le piston 140 pour l'amener en butée basse ou bien lorsque la broche est enfoncée en force dans sa cavité. La broche une fois en place, les ergots reviennent naturellement en position saillante et se logent dans des renfoncements correspondants de la cavité. Pour dégager la broche, il suffit d'appuyer sur le piston 140 ce qui escamote les ergots et permet de retirer la broche de sa cavité. La seconde partie cylindrique de la broche de verrouillage présente un évidement annulaire dans lequel est montée l'antenne de l'étiquette électronique. L'antenne est recouverte d'une couche élastomère 170, choisie préférentiellement de couleur vive. Enfin, un drapeau ou une flamme 160 également de couleur vive est avantageusement attaché(e) à la broche de verrouillage au moyen d'un anneau, d'une lanière ou d'un fil résistant.

La Fig. 1B représente le haut de la broche de verrouillage selon une coupe axiale. On distingue notamment l'évidement annulaire 175 dans lequel est montée l'antenne 173, elle-même recouverte d'un anneau 170 en élastomère protégeant l'antenne de manière étanche, notamment contre la corrosion par les fluides hydrauliques. Etant donné que l'antenne est logée dans la seconde partie cylindrique, destinée à rester en dehors de la cavité, elle peut transmettre et recevoir sans occultation un signal électromagnétique. L'antenne est avantageusement une antenne omnidirectionnelle, partitionnée ou non en une pluralité de secteurs. Le circuit électronique RFID associé à l'antenne est également logé dans la seconde partie cylindrique dans une cavité (non représentée) à l'abri des chocs et des contraintes mécaniques.

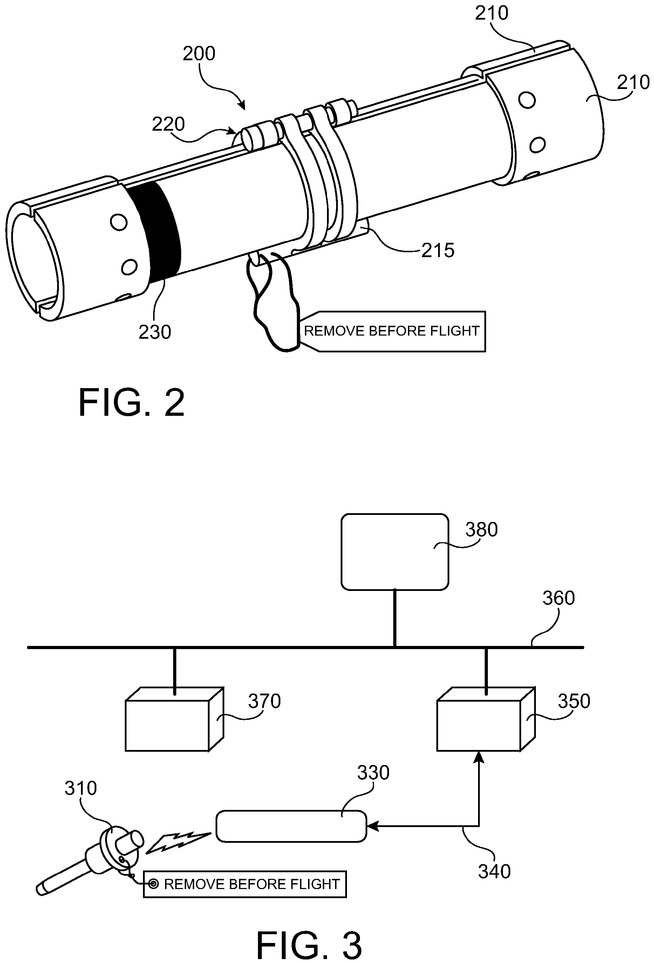

La Fig. 2 représente un dispositif de verrouillage selon un second mode de réalisation de l'invention. Il est constitué d'un collier 200 destiné par exemple à immobiliser un vérin de train sorti. Il comporte deux coquilles 210 articulées autour d'une charnière longitudinale 215. Les extrémités libres des coquilles peuvent être solidarisées au moyen d'un système d'attache rapide ou d'un simple système boulon-écrou 220. Les coquilles présentent une forme sensiblement hémicylindrique ou bien sont constituées de parties de formes hémicylindriques permettant d'empêcher la rétractation du vérin. Une flamme ou un drapeau de couleur vive est également attaché(e) audit collier. Une ou les deux coquilles hémicylindriques du collier présente(nt) un évidement à leur surface extérieure, sous la forme d'une gorge demi-annulaire, dans lequel est logée l'antenne. De manière avantageuse, l'antenne comprendra deux éléments demi-annulaires montés dans les gorges respectives des deux coquilles. L'antenne ou les deux éléments d'antenne sont reliés électriquement au circuit électronique RFID, lui-même installé dans l'une des coquilles à l'abri des chocs et des contraintes mécaniques. Chaque partie de l'antenne est également recouverte d'une couche élastomère 230 de couleur vive.

Les dispositifs de verrouillage précédemment décrits peuvent servir à immobiliser une pièce mobile de l'avion lorsque celui-ci est au sol, par exemple un élément du train d'atterrissage avant ou du train d'atterrissage principal.

Afin de détecter la présence ou vérifier l'absence de tels dispositifs de verrouillage, l'aéronef est pourvu d'une pluralité d'antennes réparties sur le fuselage, destinées à transmettre un signal d'interrogation.

Ces antennes sont avantageusement des antennes conformes, c'est-à-dire intégrées et de même forme que le fuselage ou bien montées sur la surface interne des parties en matériau composite, à faible absorption électromagnétique, du nez et des portes du train d'atterrissage de l'aéronef. Les antennes sont avantageusement disposées de manière à ce que les dispositifs de verrouillage soient capables de recevoir le signal d'interrogation en ligne directe ou LOS (*Line Of Sight*)*.*

Les différentes antennes sont couplées à des dispositifs RFID de lecture. Lorsqu'un dispositif RFID de lecture reçoit l'ordre de vérifier la présence d'un dispositif de verrouillage, il transmet un signal d'interrogation constitué d'une onde électromagnétique basse fréquence, par exemple à 125 kHz ou à 134,2 kHz. L'utilisation d'une basse fréquence permet de réduire les phénomènes d'absorption et de diffraction par les structures métalliques de l'avion et d'obtenir un champ électromagnétique relativement homogène dans la zone d'interrogation. En outre, des dispositifs de lecture d'étiquettes électroniques sont couramment disponibles à ces fréquences. Un dispositif de verrouillage recevant ledit signal d'interrogation renvoie au dispositif de lecture une réponse contenant ses données d'identification. Ces données indiquent que la réponse est envoyée par un dispositif de verrouillage et fournissent le cas échéant le type du dispositif en question. Ainsi, si des dispositifs de verrouillage de types distincts sont utilisés pour bloquer des éléments distincts de l'aéronef, la détection d'un dispositif de verrouillage sera associée de manière univoque à l'élément correspondant de l'aéronef.

La Fig. 3 illustre schématiquement un système avionique permettant de détecter la présence ou non de dispositifs de verrouillage selon l'invention.

Chaque dispositif de lecture 330 est relié à un module de commande et d'acquisition 350, lui-même connecté à un réseau de communication avionique 360 obéissant à une norme ARINC, par exemple un réseau Ethernet commuté tel qu'un réseau AFDX (*Avionics Full Duplex Switched Ethernet*). Un système d'alarme dit FWS (*Flight Warning System*), chargé de surveiller les défaillances des différents éléments de l'aéronef et de déterminer les conditions dangereuses de vol, est également connecté au réseau. Le système d'alarme 370 peut déclencher, soit de manière automatique, soit sur activation manuelle, une vérification de la présence ou de l'absence des dispositifs de verrouillage. Cette vérification interviendra notamment de manière systématique lors de la procédure de contrôle avant décollage. Elle pourra également être lancée par le personnel de maintenance pour s'assurer que tous les dispositifs de verrouillage ont bien été mis en place. Le système d'alarme 370 transmet aux dispositifs de lecture 330 un ordre d'interrogation via les modules de commande et d'acquisition 350. Alternativement, il peut transmettre un tel ordre de manière séquentielle aux différents dispositifs. Si un dispositif de lecture 330 détecte une réponse, il renvoie au système d'alarme, via son module de commande et d'acquisition associé, l'information d'identification du dispositif de verrouillage ayant répondu. Avantageusement, les étiquettes électroniques des dispositifs de verrouillage transmettent leurs réponses respectives avec des temps de retards distincts pour éviter toute collision. A cette fin, chaque étiquette pourra être équipée d'un compteur ou d'un décompteur initialisé à une valeur différente et ne répondre que lorsqu'il arrive à échéance. Le système d'alarme 370 reçoit de manière centralisée les réponses des différents modules 350. Il peut ainsi déterminer si un dispositif de verrouillage est présent et, le cas échéant, l'identifier. Si un dispositif de verrouillage est présent, il génère une alarme constituée d'un signal sonore et/ou d'indications lumineuses sur un panneau de contrôle 380 du cockpit. Les indications lumineuses sont avantageusement portées sur une représentation synoptique de l'aéronef, de sorte que l'emplacement d'un dispositif de verrouillage anormalement présent ou absent pourra être immédiatement localisé. La présente invention permet ainsi à l'équipe au sol de retirer le dispositif de verrouillage avant que l'avion ne quitte l'aéroport.

## Revendications

1. Dispositif de verrouillage d'un élément mobile du train d'atterrissage d'un aéronef, qui doit être localisé et retiré avant le départ de l'aéronef, **caractérisé en ce qu'**il comprend une étiquette électronique adaptée à recevoir un signal d'interrogation et à renvoyer un signal d'identification dudit dispositif.

2. Dispositif de verrouillage selon la revendication 1, **caractérisé en ce qu'**il se présente sous la forme d'une broche (100).

3. Dispositif de verrouillage selon la revendication 2, **caractérisé en ce que** la broche comporte une partie cylindrique (117) présentant une gorge annulaire (175) dans laquelle est montée une antenne omni-directionnelle (173).

4. Dispositif de verrouillage selon la revendication 3, **caractérisé en ce que** l'antenne est recouverte de manière étanche par une couche élastomère (170).

5. Dispositif de verrouillage selon la revendication 1, **caractérisé en ce qu'**il se présente sous la forme d'un collier (200) comprenant deux coquilles (210) reliées entre elles au moyen d'une charnière longitudinale (215).

6. Dispositif de verrouillage selon la revendication 5, **caractérisé en ce qu'**au moins une coquille comprend une partie de forme hémicylindrique présentant une gorge sensiblement demi-annulaire dans laquelle est monté un élément d'antenne.

7. Dispositif de verrouillage selon la revendication 6, **caractérisé en ce que** l'élément d'antenne est recouvert de manière étanche par une couche élastomère (230).

8. Système de détection d'au moins un dispositif de verrouillage selon l'une des revendications précédentes, **caractérisé en ce qu'**il comprend :
- des moyens de lecture (330) d'au moins une étiquette électronique pour transmettre un signal d'interrogation et recevoir une réponse contenant des données d'identification dudit dispositif ;
- des moyens de contrôle (370) commandant lesdits moyens de lecture et recevant lesdites données d'identification via un réseau avionique de communication (360); et
- des moyens de signalisation (380) indiquant si un dispositif de verrouillage a été identifié.

9. Système de détection selon la revendication 8, **caractérisé en ce que** les moyens de signalisation sont adaptés à indiquer l'emplacement du dispositif de verrouillage sur une représentation synoptique de l'aéronef.

10. Système de détection selon la revendication 8 ou 9, **caractérisé en ce que** les moyens de signalisation sont adaptés à émettre un signal sonore si un dispositif de verrouillage a été détecté.

11. Aéronef comprenant un système de détection selon l'une des revendications 8 à 10, **caractérisé en ce que** les moyens de lecture sont reliés à au moins une antenne montée sur la partie intérieure d'une porte de train d'atterrissage.

12. Aéronef comprenant un système de détection selon l'une des revendications 8 à 10, **caractérisé en ce que** les moyens de lecture sont reliés à au moins à une antenne conforme.

## Patentansprüche

1. Verriegelungsvorrichtung eines beweglichen Elements des Fahrwerks eines Luftfahrzeugs, das vor dem Abflug des Luftfahrzeugs lokalisiert und entfernt werden muss,
**dadurch gekennzeichnet, dass** sie ein elektronisches Etikett enthält, das geeignet ist, ein Abfragesignal zu empfangen und ein Identifikationssignal der Vorrichtung zurückzusenden.

2. Verriegelungsvorrichtung nach Anspruch 1, **dadurch gekennzeichnet, dass** sie in Form eines Stifts (100) vorliegt.

3. Verriegelungsvorrichtung nach Anspruch 2, **dadurch gekennzeichnet, dass** der Stift einen zylindrischen Bereich (117) mit einer Ringnut (175) aufweist, in die eine Rundstrahlantenne (173) montiert ist.

4. Verriegelungsvorrichtung nach Anspruch 3, **dadurch gekennzeichnet, dass** die Antenne dicht mit einer Elastomerschicht (170) bedeckt ist.

5. Verriegelungsvorrichtung nach Anspruch 1, **dadurch gekennzeichnet, dass** sie in Form einer Schelle (200) vorliegt, die zwei Schalen (210) enthält, die miteinander mittels eines Längsscharniers (215) verbunden sind.

6. Verriegelungsvorrichtung nach Anspruch 5, **dadurch gekennzeichnet, dass** mindestens eine Schale einen Bereich von halbzylindrischer Form enthält, der eine im Wesentlichen halbringförmige Nut aufweist, in die ein Antennenelement montiert ist.

7. Verriegelungsvorrichtung nach Anspruch 6, **dadurch gekennzeichnet, dass** das Antennenelement dicht mit einer Elastomerschicht (230) bedeckt ist.

8. Erfassungssystem mindestens einer Verriegelungsvorrichtung nach einem der vorhergehenden Ansprüche, **dadurch gekennzeichnet, dass** es enthält:
- Leseeinrichtungen (330) mindestens eines elektronischen Etiketts, um ein Abfragesignal zu übertragen und eine Antwort zu empfangen, die Identifikationsdaten der Vorrichtung enthält;
- Steuereinrichtungen (370), die die Leseeinrichtungen steuern und die Identifikationsdaten über ein Avionik-Kommunikationsnetzwerk (360) empfangen; und
- Signalisierungseinrichtungen (380), die anzeigen, ob eine Verriegelungsvorrichtung erkannt wurde.

9. Erfassungssystem nach Anspruch 8, **dadurch gekennzeichnet, dass** die Signalisierungseinrichtungen geeignet sind, die Einbaustelle der Verriegelungsvorrichtung in einer synoptischen Darstellung des Luftfahrzeugs anzuzeigen.

10. Erfassungssystem nach Anspruch 8 oder 9, **dadurch gekennzeichnet, dass** die Signalisierungseinrichtungen geeignet sind, ein akustisches Signal zu senden, wenn eine Verriegelungsvorrichtung erfasst wurde.

11. Luftfahrzeug, das ein Erfassungssystem nach einem der Ansprüche 8 bis 10 enthält, **dadurch gekennzeichnet, dass** die Leseeinrichtungen mit mindestens einer Antenne verbunden sind, die auf den inneren Bereich einer Fahrwerktür montiert ist.

12. Luftfahrzeug, das ein Erfassungssystem nach einem der Ansprüche 8 bis 10 enthält, **dadurch gekennzeichnet, dass** die Leseeinrichtungen mit mindestens einer entsprechenden Antenne verbunden sind.

## Claims

1. A device for locking a movable component of the landing gear of an aircraft, which must be located and removed before the departure of the aircraft, **characterized in that** it comprises an electronic tag adapted for receiving a polling signal and returning an identification signal of said device.

2. The locking device according to claim 1, **characterized in that** it has the shape of a pin (100).

3. The locking device according to claim 2, **characterized in that** the pin comprises a cylindrical part (117) having an annular groove (175), wherein an omnidirectional antenna is mounted (173).

4. The locking device according to claim 3, **characterized in that** the antenna is sealingly covered by an elastomer layer (170).

5. The locking device according to claim 1, **characterized in that** it has the shape of a collar (200) comprising two shells (210) linked to each other by means of a longitudinal hinge (215).

6. The locking device according to claim 5, **characterized in that** at least one shell includes a part of semi-cylindrical shape having a substantially semi-annular groove, wherein an antenna element is mounted.

7. The locking device according to claim 6, **characterized in that** the antenna element is sealingly covered by an elastomer layer (230).

8. A system for detecting at least one locking device according to any of the preceding claims, **characterized in that** it comprises:
- means for reading (330) at least one electronic tag for transmitting a polling signal and receiving a reply containing identification data of said device;
- controlling means (370) controlling said reading means and receiving said identification data via an avionics communication network (360); and
- signaling means (380) indicating whether a locking device has been identified.

9. The detecting system according to claim 8, **characterized in that** the signaling means is adapted for indicating the location of the locking device on an outline representation of the aircraft.

10. The detecting system according to claim 8 or 9, **characterized in that** the signaling means is adapted for transmitting a sound signal when a locking device has been detected.

11. An aircraft comprising a detecting system according to any of claims 8 to 10, **characterized in that** the reading means is linked to at least one antenna mounted on the inner part of a landing gear flap.

12. An aircraft comprising a detecting system according to the any of claims 8 to 10, **characterized in that** the reading means is linked to at least one conformal antenna.
